(19) Europäisches Patentamt
European Patent Office
Office européen des brevets

(11) **EP 3 879 438 A1**

(12) **EUROPEAN PATENT APPLICATION**

(43) Date of publication:
**15.09.2021 Bulletin 2021/37**

(51) Int Cl.:
*G06K 9/00* (2006.01)   *G09B 29/10* (2006.01)

(21) Application number: **20161998.8**

(22) Date of filing: **10.03.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **YARA International ASA
0277 Oslo (NO)**

(72) Inventors:
• **TWARAKAVI, Navin
  Ramagondanahalli Borewell Road
  Whitefield
  Bangalore
  Karnataka 560066 (IN)**
• **BOEZAART, Ruan
  159919 Singapore (SG)**

(74) Representative: **AWA Sweden AB
P.O. Box 11394
404 28 Göteborg (SE)**

(54) **METHOD FOR PREPARING A REPRESENTATION OF A GEOGRAPHICAL POLYGON**

(57)    The present invention relates to a computer-implemented method, which method comprises: receiving a first representation (10) of a geographical polygon (12) defining a parcel of land (14), which first representation includes latitude and longitude coordinates (Lat1-4; Long1-4) that represent at least the corners (18a-d) of the geographical polygon; based on the first representation, determining various features of the geographical polygon; and preparing a second representation (34) of the geographical polygon, which second representation includes the geometric centre (20) of geographical polygon, first two alphanumeric characters (XX), second two alphanumeric characters (YY), a fifth alphanumeric character (Z), and a sixth alphanumeric character (A).

Fig. 2

EP 3 879 438 A1

**Description**

Technical field

The present invention relates to a computer-implemented method for preparing a representation of a geographical polygon defining a parcel of land as shown on a digital satellite and/or aerial image. The present invention also relates to a computer program product, a computer-readable storage medium, an electrical signal, and a computer device.

Background

Geographical shapes (polygons) may be parcels of land on a map that are pixelated and used to represent real-estate, agricultural farms, forests, parks and other aggregated land assets. Communicating the extent of a geographical polygon is typically done by an array of GPS coordinates that represent the edges (vertices) of the polygon. The array of edge coordinates is represented digitally using a variety of file formats such as CSV, Shapefile, KML among others.

However, communicating the shape of a geographical polygon from one entity to another (especially in offline mode) can be often hard because of the nature of information. While the traditional approach is the most accurate way to inform the shape of the geographical polygon, it renders itself to not be user-friendly.

Summary of the invention

It is an object of the present invention to overcome or at least alleviate the aforementioned problems.

According to a first aspect of the present invention, this and other objects is achieved by a computer-implemented method, which method comprises: receiving a first representation of a geographical polygon defining a parcel of land as shown on a digital satellite and/or aerial image, which first representation includes latitude and longitude coordinates that represent at least the corners (vertices) of the geographical polygon; based on the first representation,

- determining the geometric centre of the geographical polygon,
- determining half the length of the geographical polygon in the north-south direction and providing first two alphanumeric characters XX representing the determined half-length of the geographical polygon in the north-south direction,
- determining half the width of the geographical polygon in the east-west direction and providing second two alphanumeric characters YY representing the determined half-width of the geographical polygon in the east-west direction,
- determining which shape of a preselected number of different shapes that best matches the geographical polygon and retrieving from a table a fifth alphanumeric character Z representing that shape, and

- determining a principal axis of the geographical polygon and providing a sixth alphanumeric character A representing the angle of the determined principal axis relative to the north-south direction; and

preparing a second representation of the geographical polygon, which second representation includes the geometric centre of geographical polygon, the first two alphanumeric characters, the second two alphanumeric characters, the fifth alphanumeric character, and the sixth alphanumeric character.

By means of the present invention, it becomes possible to represent the parcel of land using much less data but with manageable loss in accuracy*. This in turn facilitates communication of the whereabouts and extension of the parcel of land. For example, the first representation of a 15-corner geographical polygon defining the parcel of land may contain at least 15 x 2 x 6 = 180 digits (the GPS coordinates of each corner here comprises two six-digit numbers), whereas the second representation of the same parcel of land may contain only (1 x 2 x 6) + 2 + 2 + 1 + 1 = 18 characters. This means for example that the second representation can be transmitted to a more basic cell phone (also referred to as a feature phone) using an SMS message limited to 160 characters, which indeed is useful in communities where more advanced smartphones may not be readily available. Also, a farmer can by means of the second representation (e.g. memorized or in the SMS message) easily communicate the (approximate) location and shape of their parcel of land to agencies such as banks, which are slowly using satellite imagery to analyse the credit worthiness of a farmer.

In other words, the present invention may encode data (first representation of geographical polygon -> second representation) for reliable and/or efficient transmission or storage (and corresponding decoding).

*Initial tests have shown an average accuracy of 90% in representing most geographical polygons.

Furthermore, as the algorithm of the present invention is quite "simple"/not resource-intensive, the second representation may be constructed offline (i.e. without internet connection), which allows the present invention to be used also in remote rural areas where internet connection may be absent or at least not stable.

The first representation of the geographical polygon could for example be provided by (manually) marking the corners of the parcel of land as shown on the digital satellite and/or aerial image of an electronic mapping service. Furthermore, the geometric centre of the geographical polygon, which may be referred to as the geographical polygon's centroid, may for example be determined using geometric decomposition. Furthermore, the principal axis of the geographical polygon may be the axis for which the product of inertia is zero.

Determining the geometric centre of the geographical polygon may include determining a latitude coordinate LatC and a longitude coordinate LongC representing the geometric centre of the geographical polygon, wherein the latitude coordinate and the longitude coordinate are included in the second representation of the geographical polygon. Hence, the second representation may be (LatC, LongC) [XX YY ZA], for example (57.7065, 11.9687) [12 53 8 5]. Alternatively, the geometric centre of the geographical polygon could in the second representation for example be represented by three words as provided by what3words, which can make the second representation easier to remember. what 3 words has assigned each 3m square in the world a unique 3 word address, for example ///save.strictly.pigment.

The method may further comprise rotating the geographical polygon so that the determined principal axis aligns with the north-south direction. This may facilitate and speed up determining the half-length, half-width, and/or which shape that best matches the geographical polygon.

Accordingly, said half the length and half the width may be determined of the geographical polygon so rotated.

The first two alphanumeric characters XX representing the determined half-length of the geographical polygon in the north-south direction may be provided by dividing the determined half-length by the pixel size of said digital satellite and/or aerial image, wherein the second two alphanumeric characters YY representing the determined half-width of the geographical polygon in the east-west direction are provided by dividing the determined half-width by the pixel size of said digital satellite and/or aerial image. The pixel size (resolution) of Sentinel satellite images may for example be 30 m, which for an exemplary half-length of 500 m means that the first two alphanumeric characters XX, in case they are digits 0-9, become 500 / 30 = 17 (rounded to the nearest integer). The maximum half-length (and half-width) would here be 99 * 30 = 2970 m, which for the purpose of agriculture usually is enough.

Determining which shape of a preselected number of different shapes that best matches the geographical polygon may include overlaying the different shapes over the rotated geographical polygon to determine which of the different shapes that overlays the rotated geographical polygon in the most accurate way. Which of the different shapes that overlays the rotated geographical polygon in the most accurate way may for example be determined iteratively by looking at non-intersection areas of the overlaid shapes and the geographical polygon. The preselected number of different shapes may for example include circle, rectangle, rhombus, triangle, ellipse, square, and trapezoid. These are shapes that can approximate most parcels of land/farms.

The first two alphanumeric characters, the second two alphanumeric characters, the fifth alphanumeric character, and the sixth alphanumeric character may be digits, for example 0-9. Hence, an exemplary second representation may be (57.7065, 11.9687) [12 53 8 5].

Alternatively, at least the first two alphanumeric characters and the second two alphanumeric characters may be (Latin) letters. Hence, another exemplary second representation may be (57.7065, 11.9687) [RG AH 8 5]. There are 26 letters in the English alphabet, which yields $26^2 = 676$ different two-letter combinations, which in turn means that the maximum half-length (and half-width) can be increased to 676 * 30 = 20 km (for 30 m pixel size).

The fifth alphanumeric character and/or the sixth alphanumeric character could also be letters. This could improve the granularity.

The method may further comprise transmitting said second representation of the geographical polygon to an electronic device, for example in an SMS message to a cell phone, as mentioned above.

The method may further comprise displaying said second representation of the geographical polygon on a display, whereby it can be written down on paper or memorized by a user (farmer). The display may for example be the display of a computer device performing the present method.

The second representation could be transmitted and/or displayed as it is (i.e. as a phrase, for example (57.7065, 11.9687) [12 53 8 5]), or encoded as a QR code, for example.

The method may for example be performed by an app on a smartphone or tablet, typically using a processor and memory of the smartphone or tablet.

According to a second aspect of the invention, there is provided a computer-implemented method, which method comprises: receiving a second representation of a geographical polygon, which second representation is prepared by the computer-implemented method according to the first aspect; restoring the geographical polygon based on the second representation; and displaying the restored geographical polygon overlaid on a digital satellite and/or aerial image. The method of the second aspect may be regarded as interrelated to the method of the first aspect (first aspect: encoding - second aspect: decoding).

Restoring the geographical polygon based on the second representation may basically include performing the algorithm of the first aspect of the invention in reverse. Furthermore, it should be appreciated that the restored geographical polygon may be an approximation of the original geographical polygon.

Furthermore, as the algorithm of the present invention is quite simple, the geographical polygon second representation may be restored offline (i.e. without internet connection), which allows the present invention to be used also in remote rural areas where internet connection may be absent or at least not stable.

Hence in this second aspect the farmer can come to the bank with just the second representation, whereby the bank easily can see the farmer's parcel of land on the digital satellite and/or aerial image, to for example analyze the credit worthiness of the farmer.

According to a third aspect of the invention, there is provided a computer program product comprising computer program code to perform, when executed on a computer device, the method according to the first aspect and/or according to the second aspect. The computer program product may be a non-transitory computer program product. The computer device may for example be the aforementioned smartphone or tablet. The computer program product may be an app.

According to a fourth aspect of the invention, there is provided a computer-readable storage medium comprising the computer program product according to the third aspect.

According to a fifth aspect of the invention, there is provided electrical signal embodied on a carrier wave and propagated on an electrical medium, the electrical signal comprising the computer program product according to the third aspect.

According to a sixth aspect of the invention, there is provided a computer device, for example a smartphone or tablet, configured to perform the method according to the first aspect and/or according to the second aspect. The computer device may be configured to perform the method according to the first aspect and/or according to the second aspect by means of an app. The app may run or be executed on the computer device using a processor and memory of the computer device.

Brief description of the drawings

These and other aspects of the present invention will now be described in more detail, with reference to the appended drawings showing a currently preferred embodiment of the invention.

Fig. 1 schematically illustrates i.a. a computer device according to an aspect of the present invention.
Fig. 2 is a flow chart of a method according to aspects of the invention.
Figs. 3a-g illustrate various steps of the present method.

Detailed description

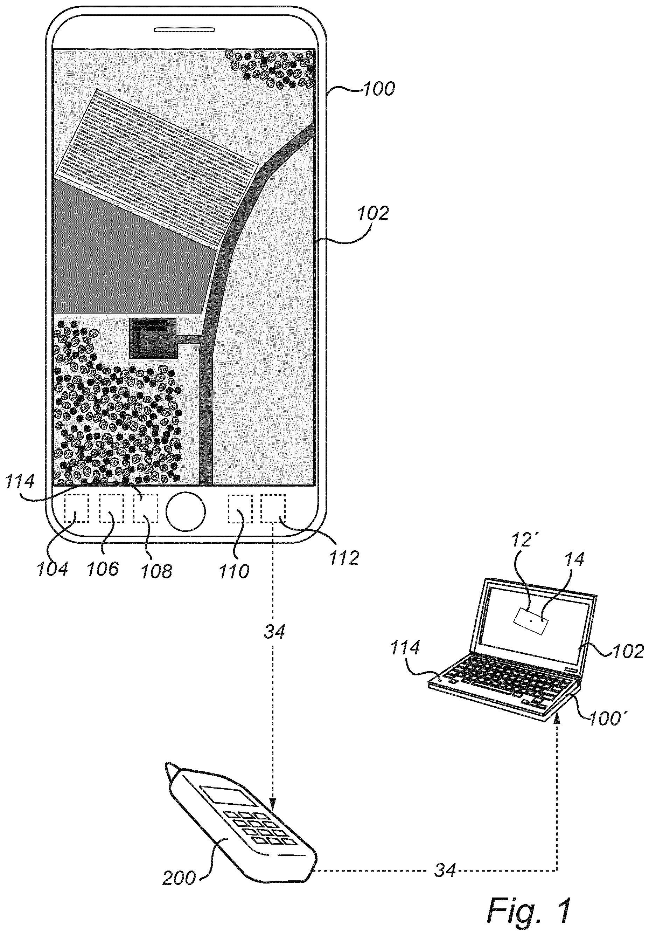

Fig. 1 illustrates a computer device 100 according to an aspect of the present invention. The computer device 100 is here a smartphone (e.g. an iPhone or an Android phone). Alternatively, the computer device 100 could be a tablet (e.g. an iPad) or a laptop or a desktop computer.

The computer device 100 comprises an electronic display 102. The electronic display 102 may have a touchscreen, so that it except for showing information can serve as a user input device. The computer device 100 may also comprise a processor 104, a memory 106, and a storage 108. The computer device 100 may also comprise a GPS receiver 110 and wireless communication means 112.

Moving on, the computer device 100 may be configured to perform various specific steps or actions detailed in the following by means of an app 114 (computer program product). The app 114 may be downloaded to the computer device 100 and stored on the aforementioned storage 108. The app 114 may run or be executed on the mobile computing device 10 using the aforementioned processor 104 and memory 106.

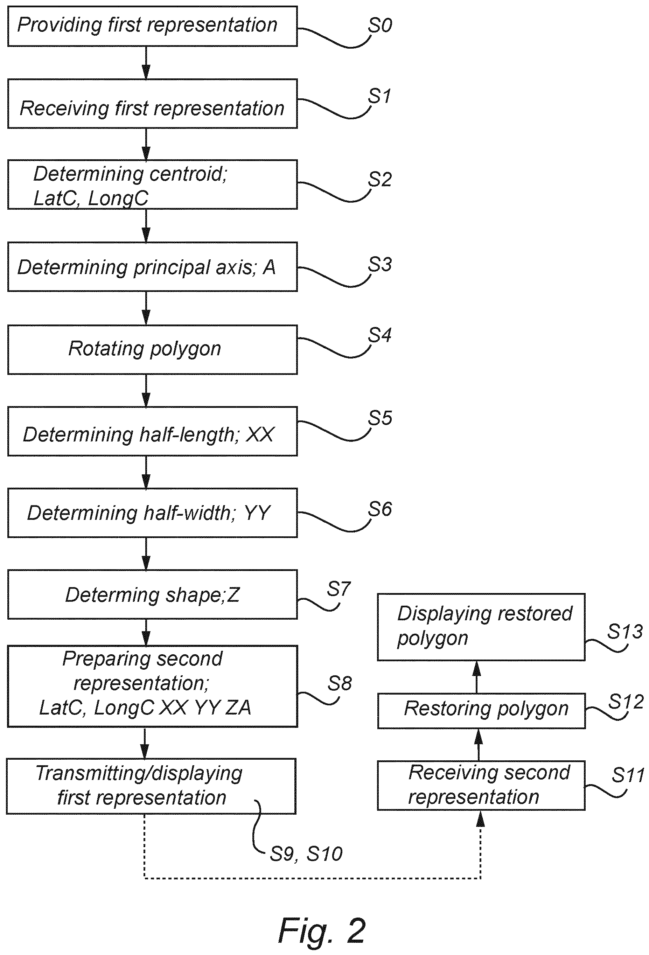

Turning to fig. 2, fig. 2 is a flow chart of a method according to the first aspect (left) and the second aspect (right) of the present invention.

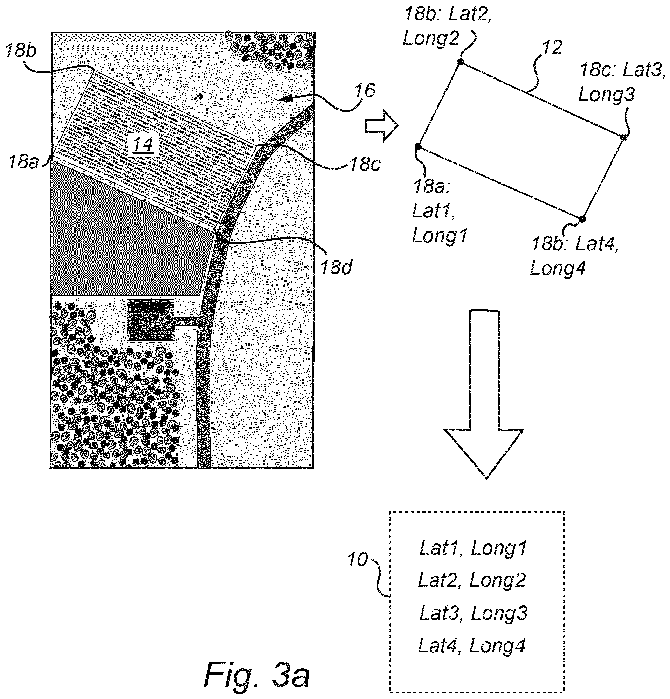

At S1, the method according to the first aspect comprises receiving a first representation 10 of a geographical polygon 12 defining a parcel of land 14, as shown on a digital satellite and/or aerial image 16, see fig. 3a. The parcel of land 14 may for example be an agricultural farm, but could alternatively be real-estate, forest, a park, etc. The digital satellite and/or aerial image 16 may for example be a Sentinel satellite image. The first representation 10 includes latitude and longitude coordinates Lat1-4, Long1-4 that represent the corners (vertices) 18a-d of the geographical polygon 12. Here, the geographical polygon 12 is a (tilted) rectangle, but it could have any polygonal shape.

The first representation 10 of the geographical polygon 12 could be provided by (manually) marking the corners 18a-d of the parcel of land 14 as shown on the digital satellite and/or aerial image 16 of an electronic mapping service, at S0. For example, a user could mark the corners 18a-d as the digital satellite and/or aerial image 16 is displayed on the aforementioned electronic display 102 of the computer device (smartphone) 100, using a pointing device like their finger or a stylus pen.

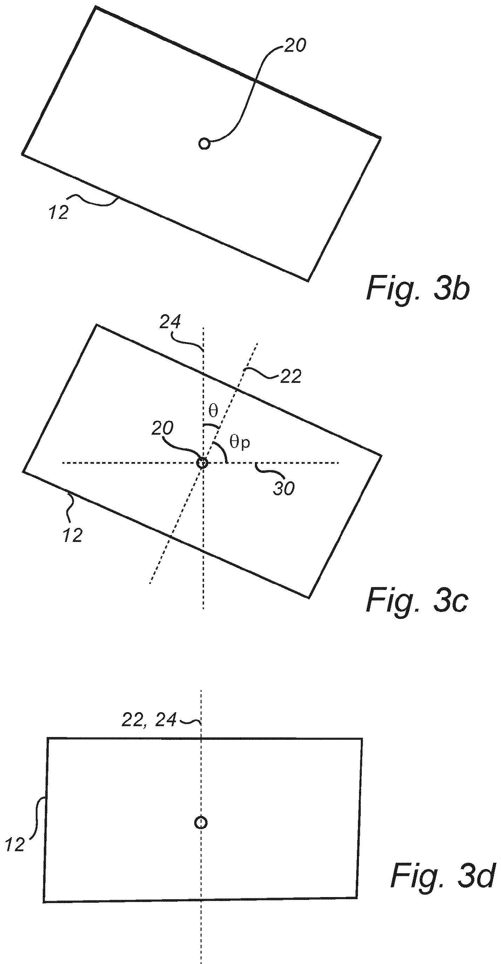

At S2, the method determines the geometric centre (centroid) 20 of the geographical polygon 12, see fig. 3b. The geometric centre 20 of the geographical polygon 12 may for example be determined using geometric decomposition, a technique which is known per se. The geometric centre 20 is preferably represented by a latitude coordinate LatC and a longitude coordinate LongC, for example 57.7065 and 11.9687.

At S3, the method determines a principal axis 22 of the geographical polygon 12, see fig. 3c. The principal axis 22 is the axis for which the product of inertia is zero. The orientation of the principal axis 22 with respect to the centroidal coordinates LongC and LatC can be obtained using

$$\theta_p = \frac{1}{2} tan^{-1} \left[ \frac{2I_{LongCLatC}}{I_{LatC} - I_{LongC}} \right]$$

where $I_{LongC}$, $I_{LatC}$, and $I_{LongCLatC}$ represent the moments of inertia about the east-west direction 30, moment of inertia about the north-south direction 24, and the product of inertia with respect to east-west direction 30 and north-south direction 24, respectively. The angle $\theta_p$ is measured positive counter clockwise from the centroidal east-west direction 30. From the angle $\theta_p$, the angle $\theta$ with the north-south direction 24 may be derived.

The method at S3 further provides a (sixth) alphanumeric character A representing the angle $\theta$ of the determined principal axis 22 relative to the north-south direction 24. The alphanumeric character A may for example be a digit 0-9, wherein A = 0 represents 0 degrees and A = 9 represents 324 degrees. The alphanumeric character A may for example be derived using the formula A = (angle $\theta$ made with vertical axis 24 clockwise)/36. Here, the angle $\theta$ is about 20 deg, whereby A = 1.

At S4, the method may comprise rotating the geographical polygon 12 so that the determined principal axis 22 aligns with the north-south direction 24, see fig. 3d.

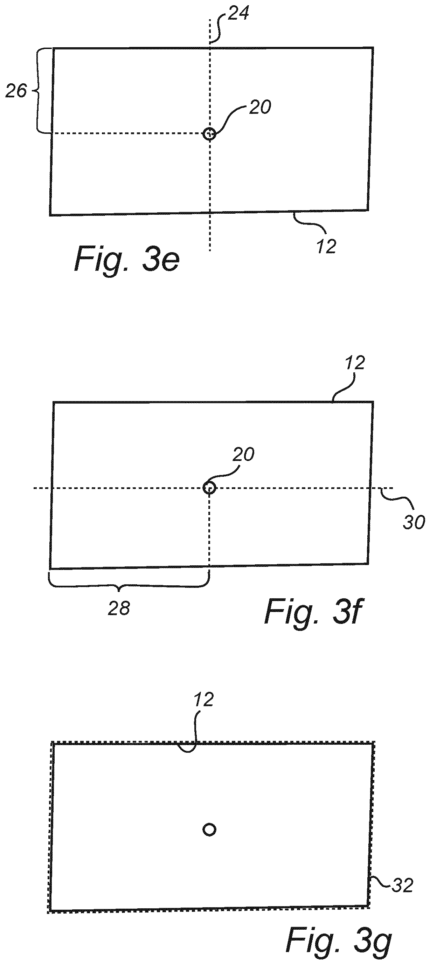

At S5, the method comprises determining half the length 26 of the rotated geographical polygon 12 in the north-south direction 24, see fig. 3e, wherein half the length is ½ the length of the principal axis 22 that intersects rotated geographical polygon 12 at both ends. The method at S5 further provides (first) two alphanumeric characters XX representing the determined half-length 26. The two alphanumeric characters XX may be provided by dividing the determined half-length 26 by the pixel size of the digital satellite and/or aerial image 16. For an exemplary half-length 26 of 500 m given a pixel size of 30 m, the two alphanumeric characters XX, in case they are digits 0-9, become 500 / 30 = 17 (rounded to the nearest integer).

At S6, the method comprises determining half the width 28 of the rotated geographical polygon 12 in the east-west direction 30, see fig. 3f, wherein half the width is ½ the length of an axis, which axis passes through the geometric centre 20 and is perpendicular to the principal axis 22, that intersects rotated geographical polygon 12 at both ends. The method at S6 further provides (second) two alphanumeric characters YY representing the determined half-width 28. The two alphanumeric characters YY may be provided by dividing the determined half-width 28 by the pixel size of the digital satellite and/or aerial image 16. For an exemplary half-width 26 of 700 m given a pixel size of 30 m, the two alphanumeric characters YY, in case they are digits 0-9, become 700 / 30 = 23 (rounded to the nearest integer).

At S7, the method determines which shape of a preselected number of different shapes that best matches the (rotated) geographical polygon 12, and retrieves from a table a (fifth) alphanumeric character Z representing that shape. The table may for example be:

| Z | Shape |
|---|-------|
| 0 | Circle |
| 1 | Rectangle |
| 2 | Rhombus |
| 3 | Triangle |

(continued)

| Z | Shape |
|---|-------|
| 4 | Ellipse |
| 5 | Square |
| 6 | Trapezoid |
| 7 | Reserved |
| 8 | Reserved |
| 9 | Reserved |

Specifically, determining which shape of that best matches the geographical polygon 12 may include overlaying the different shapes of the table, which overlaid shapes are adjusted based on the determined half-length 26 and half-width 28, over the rotated geographical polygon 12 to determine which of the different shapes that overlays the rotated geographical polygon 12 in the most accurate way. Namely, each overlaid and adjusted shape is rotated about the centroid, and for each rotation, the area not intersecting between the shape and the polygon 12 is estimated. The method thus derives areas not intersected for all rotation possibilities and shapes of the table. Given seven shapes as in the table above, and 36 different rotation angles, it results in 252 possibilities. Then, the shape with the least area lost during intersection is selected. Here, the most representative shape is a rectangle 32 (see fig. 3g), which yields Z = 1.

At S8, the method prepares a second representation of the geographical polygon, which second representation includes the geometric centre of geographical polygon (here LatC, LongC), the first two alphanumeric characters XX, the second two alphanumeric characters YY, the fifth alphanumeric character Z, and the sixth alphanumeric character A. Hence, the second representation may be (LatC, LongC) [XX YY ZA], for example (57.7065, 11.9687) [17 23 1 1].

At S9, the method may comprise transmitting the second representation 34 of the geographical polygon 12 to an electronic device 200, see fig. 1. The second representation may for example be transmitted in an SMS message using the wireless communication means 112 of the computer device 100. The receiving electronic device 200 may be a feature phone.

Alternatively or complementary, the second representation may be displayed on the electronic display 102 of the computer device 100 (S10).

At S11, the method according to the second aspect of the invention comprises receiving the second representation 34 of the geographical polygon 12, by the computer device 100 or by another similar computer device 100' running the same app 114, see fig. 1. The second representation 34 (e.g. (57.7065, 11.9687) [17 23 1 1]) may for example be manually entered into the computer device 100'.

At S12, the method further comprises restoring the geographical polygon 12 based on the second representation 34, by performing steps S2-S8 "in reverse". That is, the method may derive the shape defined by Z, adjust the half-length and half-width according to XX and YY, respectively, rotate the shape based on A, and the position the shape based on LatC and LongC.

At S13, the method displays the restored geographical polygon 12' overlaid on a digital satellite and/or aerial image on the electronic display 102 of the computer device 100', see fig. 1. Hence, the parcel of land 14 can easily be identified on the digital satellite and/or aerial image.

In an exemplary use case of the present invention, a farmer can come to an agency or bank hosting the computer device 100 and - possibly with the help of a specialist - identify their parcel of land 14 on the digital satellite and/or aerial image 16, which allows for the provision of first representation 10. The computer device 100 then prepares the second representation 34 based on the first representation 10, and SMSs the second representation 34 to the farmer's feature phone. The farmer may then go to another agency or bank bringing the feature phone with him and present the second representation 34 to the another agency or bank, which then performs reconstruction using another computer device 100', allowing the parcel of land 14 to be displayed and identified digital satellite and/or aerial imagery, which in turn for example can be used to analyze the credit worthiness of the farmer. It is expected that the present invention can be of great use for farmers especially in the developing world.

The person skilled in the art realizes that the present invention by no means is limited to the embodiments described above. On the contrary, many modifications and variations are possible within the scope of the appended claims.

## Claims

1. A computer-implemented method, which method comprises:

    receiving a first representation (10) of a geographical polygon (12) defining a parcel of land (14) as shown on a digital satellite and/or aerial image (16), which first representation includes latitude and longitude coordinates (Lat1-4; Long1-4) that represent at least the corners (18a-d) of the geographical polygon; based on the first representation,

    - determining the geometric centre (20) of the geographical polygon,
    - determining half the length (26) of the geographical polygon in the north-south direction (24) and providing first two alphanumeric characters (XX) representing the determined half-length of the geographical polygon in the north-south direction,
    - determining half the width (28) of the geographical polygon in the east-west direction (30) and providing second two alphanumeric characters (YY) representing the determined half-width of the geographical polygon in the east-west direction,
    - determining which shape (32) of a preselected number of different shapes that best matches the geographical polygon and retrieving from a table a fifth alphanumeric character (Z) representing that shape, and
    - determining a principal axis (22) of the geographical polygon and providing a sixth alphanumeric character (A) representing the angle (θ) of the determined principal axis relative to the north-south direction; and

    preparing a second representation (34) of the geographical polygon, which second representation includes the geometric centre of geographical polygon, the first two alphanumeric characters, the second two alphanumeric characters, the fifth alphanumeric character, and the sixth alphanumeric character.

2. A computer-implemented method according to claim 1, wherein determining the geometric centre of the geographical polygon includes determining a latitude coordinate (LatC) and a longitude coordinate (LongC) representing the geometric centre of the geographical polygon, and wherein the latitude coordinate and the longitude coordinate are included in the second representation of the geographical polygon.

3. A computer-implemented method according to claim 1 or 2, which method further comprises rotating the geographical polygon so that the determined principal axis aligns with the north-south direction.

4. A computer-implemented method according to claim 3, wherein said half the length and half the width are determined of the geographical polygon so rotated.

5. A computer-implemented method according to any one of the preceding claims, wherein the first two alphanumeric characters (XX) representing the determined half-length of the geographical polygon in the north-south direction are provided by dividing the determined half-length by the pixel size of said digital satellite and/or aerial image, and wherein the second two alphanumeric characters (YY) representing the determined half-width of the geographical polygon in the east-west direction are provided by dividing the determined half-width by the pixel size of said digital satellite and/or aerial image.

**6.** A computer-implemented method according to claim 3 or any claim dependent thereon, wherein determining which shape of a preselected number of different shapes that best matches the geographical polygon includes overlaying the different shapes over the rotated geographical polygon to determine which of the different shapes that overlays the rotated geographical polygon in the most accurate way.

**7.** A computer-implemented method according to any one of the preceding claims, wherein the first two alphanumeric characters, the second two alphanumeric characters, the fifth alphanumeric character, and the sixth alphanumeric character are digits, for example 0-9.

**8.** A computer-implemented method according to any one of the claims 1 - 7, wherein the first two alphanumeric characters and the second two alphanumeric characters are letters.

**9.** A computer-implemented method according to any one of the preceding claims, which method further comprises transmitting said second representation of the geographical polygon to an electronic device (200).

**10.** A computer-implemented method according to any one of the preceding claims, which method further comprises displaying said second representation of the geographical polygon on a display (102).

**11.** A computer-implemented method according to any one of the preceding claims, performed by an app (114) on a smart phone (100) or tablet.

**12.** A computer-implemented method, which method comprises:

   receiving a second representation (34) of a geographical polygon (12), which second representation is prepared by the computer-implemented method according to any one of the preceding claims;
   restoring the geographical polygon based on the second representation; and
   displaying the restored geographical polygon (12') overlaid on a digital satellite and/or aerial image.

**13.** A computer program product (114) comprising computer program code to perform, when executed on a computer (100), the method according to any one of the claims 1-11 and/or according to claim 12.

**14.** A computer-readable storage medium comprising the computer program product according to claim 13.

**15.** An electrical signal embodied on a carrier wave and propagated on an electrical medium, the electrical signal comprising the computer program product according to claim 13.

**16.** A computer device (100), for example a smart phone or tablet, configured to perform the method according to any one of the claims 1-11 and/or according to claim 12.

*Fig. 1*

| Providing first representation | S0 |

| Receiving first representation | S1 |

| Determining centroid; LatC, LongC | S2 |

| Determining principal axis; A | S3 |

| Rotating polygon | S4 |

| Determining half-length; XX | S5 |

| Determining half-width; YY | S6 |

| Determing shape;Z | S7 |

| Preparing second representation; LatC, LongC XX YY ZA | S8 |

| Transmitting/displaying first representation | S9, S10 |

| Displaying restored polygon | S13 |

| Restoring polygon | S12 |

| Receiving second representation | S11 |

*Fig. 2*

*Fig. 3a*

*Fig. 3b*

*Fig. 3c*

*Fig. 3d*

Fig. 3e

Fig. 3f

Fig. 3g

Europäisches
Patentamt

European
Patent Office

Office européen
des brevets

# EUROPEAN SEARCH REPORT

Application Number

EP 20 16 1998

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WEN JIANG ET AL: "What3Words Geocoding Extensions", JOURNAL OF GEOVISUALIZATION AND SPATIAL ANALYSIS, 15 February 2018 (2018-02-15), XP055726690, | 1-5,7-16 | INV. G06K9/00 G09B29/10 |
| Y | * the whole document * | 6 | |
| Y | US 2015/230054 A1 (MYLLYMAKI JUSSI [FI] ET AL) 13 August 2015 (2015-08-13) * figure 1 * * figure 4 * * figure 6 * | 6 | |
| A | WO 2013/006847 A1 (SOM ANUP [US]) 10 January 2013 (2013-01-10) * figure 9 * | 1-16 | |
| A | US 2017/365064 A1 (VAN 'T WOUD JOHANNES SALOMON SEBASTIAAN [NL] ET AL) 21 December 2017 (2017-12-21) * figure 2 * * paragraph [0046] * | 1-16 | |
| A | F H Abdulrahman: "Using KML files as encoding standard to explore locations, access and display data in Google Earth", Dissertation for Degree Master of Science in the Graduate School of The Ohio State University, 1 January 2008 (2008-01-01), pages 1-48, XP055226857, Retrieved from the Internet: URL:http://citeseerx.ist.psu.edu/viewdoc/download?doi=10.1.1.149.5454&rep=rep1&type=pdf [retrieved on 2015-11-09] * the whole document * | 1-16 | TECHNICAL FIELDS SEARCHED (IPC) G06K G09D G09B |

The present search report has been drawn up for all claims

| Place of search | Date of completion of the search | Examiner |
|---|---|---|
| The Hague | 2 September 2020 | Martinière, Anthony |

EPO FORM 1503 03.82 (P04C01)

## ANNEX TO THE EUROPEAN SEARCH REPORT
## ON EUROPEAN PATENT APPLICATION NO.

EP 20 16 1998

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2020

| Patent document cited in search report | | | Publication date | Patent family member(s) | | | Publication date |
|---|---|---|---|---|---|---|---|
| US 2015230054 | A1 | | 13-08-2015 | CN<br>DE<br>EP<br>US<br>WO | 106068656<br>202015009195<br>3105948<br>2015230054<br>2015123186 | A<br>U1<br>A1<br>A1<br>A1 | 02-11-2016<br>15-11-2016<br>21-12-2016<br>13-08-2015<br>20-08-2015 |
| WO 2013006847 | A1 | | 10-01-2013 | US<br>WO | 2013013202<br>2013006847 | A1<br>A1 | 10-01-2013<br>10-01-2013 |
| US 2017365064 | A1 | | 21-12-2017 | NONE | | | |

For more details about this annex : see Official Journal of the European Patent Office, No. 12/82

EPO FORM P0459